# EUROPÄISCHE PATENTSCHRIFT

(11) **EP 1 092 461 B1**
(45) Veröffentlichungstag und Bekanntmachung des Hinweises auf die Patenterteilung: **24.12.2008**
(21) Anmeldenummer: 00121395.8
(22) Anmeldetag: 12.10.2000
(51) Int. Cl.: B01D 29/15

(54) **Filterpatrone mit Mittelrohr**
Filter cartridge with central pipe
Cartouche filtrante avec tuyau central

(30) Priorität: 14.10.1999 DE 29918105 U
(43) Veröffentlichungstag der Anmeldung: 18.04.2001
(73) Patentinhaber: Mann + Hummel GmbH, 71638 Ludwigsburg (DE)
(72) Erfinder: Sommer, Bruno, 71636 Ludwigsburg (DE); Jokschas, Günter, 71540 Murrhardt (DE); Matthäus, Huber, 94419 Reisbach (DE)
(74) Vertreter: Voth, Gerhard

(56) Entgegenhaltungen:
- DE-A- 3 921 369
- US-A- 4 422 790
- US-A- 5 435 915

## Beschreibung

### Stand der Technik

Die Erfindung betrifft eine Filterpatrone, insbesondere für die Flüssigkeitsfiltrierung, welche ein Mittelrohr aufweist, nach der Gattung des Schutzanspruches 1.

Aus der EP 835 158 B1 ist eine solche Flüssigkeitsfilterpatrone mit Mittelrohr bekannt. Das Mittelrohr wird in das mit Endscheiben versehene, sternförmig gefaltete Filterpapier hineingeschoben, wobei eine Dichtung zwischen Endscheiben und Mittelrohr zustande kommt. Um die Montage des Mittelrohrs zu erleichtern und eine Beschädigung des Filterpapiers zu vermeiden, ist das Mittelrohr zweiteilig aufgebaut, so daß dieses von beiden Seiten in das sternförmig gefaltete Filterpapier hineingeschoben werden kann. Dabei stoßen die nach innen ragenden Enden der Mittelrohrteile zusammen, wodurch einen Schnappverbindung geschlossen wird, die das Mittelrohr im Filterpapier fixiert.

Zwar wird die Montage des Mittelrohrs durch die beschriebene Schnappverbindung vereinfacht, jedoch muß aufgrund der Ausgestaltung der Schnappverbindung auf die richtige Winkelstellung der beiden Mittelrohrteile zueinander während der Montage geachtet werden. Die Schnapphaken am Oberteil des Mittelrohrs greifen nämlich in Fenster im Unterteil des Mittelrohres ein, wodurch eine formschlüssige Form erzielt wird. Es gibt Winkelstellungen zwischen den beiden Mittelrohrteilen, in denen die Schnappnasen auf den Stegen zwischen den Fenstern zu liegen kommen, so daß eine zuverlässige Verbindung zwischen den beiden Teilen nicht erreicht wird.

Aus der DE 19 631 278 A1 ist ein verschnapptes Milfetroles za zutnehment, Hierfür sind Führungs zapfes vorgeselien die in gaeiguete Öffnungen am Geqenstücht einrasten. Hiesbe ist eine wiukelgenane Positionierung des teile of for dexlich.

Formes beschreibt die DE 392136.9 A1 einen rohrfoimigen fütshörper für ein Fietuelenent coobei ein Rokrende des Stützleörpers auf seiues Junenseite Hintexschnes dungen und das audare Rohrende auf dessen Aussenseite ebenfalls Hinfersdinesdungen dungen anfweist die gweinsan verrastbar sind.

Aufgabe der Erfindung ist es daher, eine Filterpatrone zu schaffen, die einfach montiert werden kann, wenige Bauteile enthält und zuverlässig in der Montage bzw. im Betrieb ist. Diese Aufgabe wird durch die Merkmale des Schutzanspruches 1 gelöst.

### Vorteile der Erfindung

Die Filterpatrone gemäß der Erfindung weist ein Mittelrohr auf, welches aus einem Ober- und einem Unterteil besteht. Diese beiden Teile werden durch eine Schnappverbindung zusammengehalten. Das Mittelrohr wird im Inneren einer Filterpatrone montiert, wobei die zum Filterpapier gehörigen Endscheiben eine Dichtwirkung am Außenumfang des Mittelrohrs erzielen.

Die Schnappverbindung ist derart gestaltet, daß im Oberteil des Stützkörpers in der Nähe der Anschlußstelle zum Unterteil eine Ringnut vorgesehen ist, die im Außenumfang des Oberteils angeordnet ist. Damit ist gemeint, daß eine Zugänglichkeit der Ringnut von außen möglich ist. Dies hat den Vorteil, daß eine spritzgußtechnische Herstellung des Mittelrohrs ohne weitere Probleme möglich ist. Die Form für derartige Bauteile besteht normalerweise aus drei Teilen: einem Kern zur Bildung des Innenraums und zwei Außenschalen, die die Durchbrechungen im Stützrohr sowie die Nut hinterschneidungsfrei abbilden können.

Im Gegensatz zu den aus dem Stand der Technik bekannten Schnappfenstern weist die Ringnut keine Stege auf, die bei der Bildung der Schnappverbindung beachtet werden müssen. Die elastischen Absätze am Unterteil können unabhängig von der Winkelstellung der beiden Mittelrohrteile zueinander in die Ringnut einrasten. Hierzu geben die elastischen Absätze nach, damit das Ober- und das Unterteil aufeinandergeschoben werden können.

Die Elastizität der Absätze führt gleichzeitig zu einer Vereinfachung der Herstellung des Unterteils. Dieses kann ebenfalls wie das Oberteil in einer dreiteiligen Spritzgußform hergestellt werden. Beim Entformen wird die Elastizität der Absätze ausgenutzt, damit der Kern unabhängig von den gebildeten Hinterschneidungen aus dem Werkstück gezogen werden kann.

Die Verbindung zwischen Mittelrohr und Endscheiben des Filterpapiers ist abgedichtet. Die Abdichtung muß jedoch kein gesondertes Bauteil sein. Es kann auch die Eigenelastizität der Endscheiben genutzt werden, die zu einer Abdichtung am Mittelrohr führt. Bevorzugt wird dabei eine radiale Abdichtung verwendet. Insbesondere, wenn die Endscheiben als Folienendscheiben ausgebildet sind, bietet sich dieses Dichtprinzip an. Die Folienendscheiben bestehen dann aus einem Nitrilkautschuk, welcher durch den Aushärtungsprozeß mit den Stirnseiten des Filterpapiers verbunden wird und dabei eine gewisse Restelastizität zur Abdichtung gegen das Mittelrohr behält.

Weiterhin wird gemäß der Erfindung am Mittelrohr eine Aufnahme für eine Dichtung vorgesehen werden, die zum dichten Einbau der Filterpatrone im Gehäuse notwendig ist. Die Dichtung muß eine zuverlässige Trennung zwischen Reinseite und Rohseite des Filters gewährleisten.

Gemäß einer weiteren Ausgestaltung der Erfindung kann der elastische Absatz am Umfang des Unterteils mindestens eine, zweckmäßigerweise jedoch mehrere Aussparungen aufweisen. Diese führen dazu, daß der Absatz nicht ringförmig aufgebaut ist, sondern aus Kreisringsegmenten besteht. Diese Segmente sind im Vergleich zu einem geschlossenen Ring wesentlich elastischer, wodurch ein uneingeschränktes Funktionieren der Schnappverbindung gewährleistet ist. Alternativ hierzu könnte der Absatz auch ringförmig aufgebaut sein, wobei jedoch ein genügend elastisches Material gewählt werden muß. Dies läßt sich zum Beispiel durch die Wahl eines Elastomers erreichen, welches zum Beispiel im Mehrkomponentenspritzgießverfahren an das Unterteil angespritzt werden kann.

Werden die Aussparungen am Umfang derart dimensioniert, daß sie einen größeren oder zumindest gleichen Winkelabschnitt einnehmen, als die den Absatz bildende Segmente, ergibt sich eine besonders vorteilhafte Variante der Erfindung. Der für das Spritzgießen notwendige Kern kann dann nämlich ohne eine elastische Verformung des Absatzes entformt werden, indem dieser um den Winkelabschnitt, den die Segmente einnehmen, gedreht wird. Hierdurch läßt sich eine größere Prozeßsicherheit und geschwindigkeit erreichen. Die Teile des Mittelrohrs können bereits nach unvollständigem Erkalten des Werkstücks entformt werden, da eine Teilplastizität des Absatzes nicht zu einer bleibenden Verformung derselben führen kann.

Diese und weitere Merkmale von bevorzugten Weiterbildungen der Erfindung gehen außer aus den Ansprüchen auch aus der Beschreibung und den Zeichnungen hervor.

Weitere Einzelheiten der Erfindung werden in den Zeichnungen anhand von schematischen Ausführungsbeispielen beschrieben. Hierbei zeigen
- Figur 1: eine Filterpatrone im Längsschnitt, wobei ein Dichtring zur Abdichtung im Gehäuse zur Anwendung kommt, diese ist jedoch nicht Teil der Erfindung.
- Figur 2: die teilweise aufgeschnittene Seitenansicht einer Filterpatrone mit Formdichtung,
- Figur 3: das in der Filterpatrone gemäß Figur 1 zur Anwendung kommende Unterteil des Mittelrohrs im Mittelschnitt und
- Figur 4: die Aufsicht auf das Unterteil gemäß Figur 3.

### Beschreibung der Ausführungsbeispiele

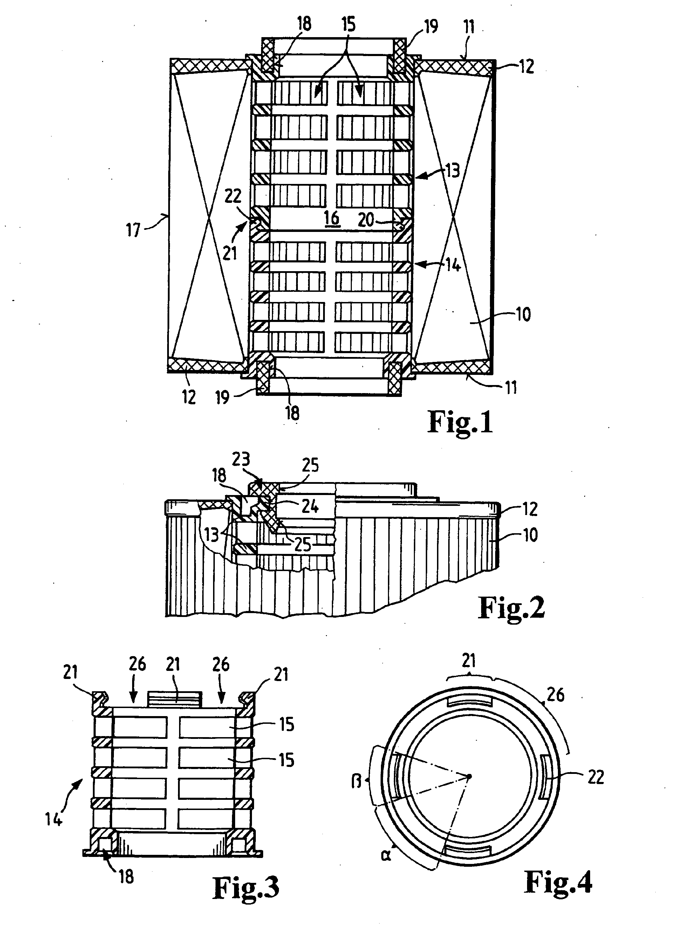

Der Aufbau einer Filterpatrone läßt sich der Figur 1 entnehmen. Diese besteht aus einem ringförmig zusammengeschlossenen Filtermedium 10, welches insbesondere ein sternförmig gefaltetes Filterpapier sein kann. Dieses ist mit Stirnseiten 11 in Endscheiben 12 aus Nitrilkautschuk eingebettet. Die Endscheiben stehen mit einem Mittelrohr im Eingriff, welches aus einem Oberteil 13 und einem Unterteil 14 besteht. Hierdurch kommt eine radiale Abdichtung zustande. Das Mittelrohr hat Durchbrüche 15, so daß dessen Inneres als Reinseite 16 des Filters fungieren kann. Die Außenseite des Filtermediums bildet somit die Rohseite 17 des Filters. Um eine Abdichtung zwischen Roh- und Reinseite zu erreichen, ist an den Stirnseiten des Mittelrohrs eine Axialnut 18 vorgesehen, die als Aufnahme für einen Dichtring 19 benutzt wird.

Oberteil 13 und Unterteil 14 des Mittelrohrs sind miteinander verschnappt. Im Oberteil ist zu diesem Zweck eine Ringnut 20 vorgesehen, die nach außen weist, und mit Segmenten 21 im Eingriff steht, die zu diesem Zweck ein Absatz 22 aufweisen.

Figur 2 zeigt eine Ausgestaltung der Stirnseite des Oberteils. Um eine Formdichtung 23 aufnehmen zu können, weist diese einen Ringvorsprung 24 auf. Die Formdichtung kann zum Beispiel zur radialen Abdichtung mit Hilfe angespritzter Lippen 25 auf einem nicht dargestellten Austrittsstutzen verwendet werden. Die Stirnseite des Oberteils 13 ist so ausgestaltet, daß gleichzeitig die Axialnut 18 entsteht. Auf diese Weise wird zum einen eine Materialanhäufung im Bereich der Dichtungsaufnahme am Mittelrohr vermieden. Weiterhin kann das selbe Oberteil zur Aufnahme unterschiedlicher Dichtungen genutzt werden. Hierdurch lassen sich insbesondere die Werkzeugkosten für unterschiedliche Varianten des Mittelrohres einsparen, da unabhängig von der Dichtung dasselbe Bauteil verwendet werden kann.

Die Figuren 3 und 4 zeigen das Unterteil des Mittelrohrs als Einzelteil. Insbesondere lassen sich die Segmente 21 erkennen, welche durch Aussparungen 26 voneinander getrennt sind. Die Aussparungen nehmen einen Winkelabschnitt α ein, welcher etwas größer gewählt ist, als der Winkelabschnitt β, der die Winkelausdehnung der Absätze 22 beschreibt. Ein zur Herstellung des Unterteils in dieses eingebrachter nicht dargestellter Kern kann somit hinterschneidungsfrei durch eine Drehung um den Winkelabschnitt β entformt werden.

## Patentansprüche

1. Filterpatrone, insbesondere zur Filtrierung von Flüssigkeiten, aufweisend
- ein ringförmig zusammengeschlossenes Filtermedium (10), welches an Stirnseiten (11) Endscheiben (12) aufweist;
- ein Mittelrohr, welches aus einem Oberteil (13) und einem Unterteil (14) besteht, wobei diese Teile durch eine Schnappverbindung zusammengehalten werden und eine Abdichtung zwischen Endscheiben (12) und Mittelrohr vorgesehen ist,
- eine Dichtung (23) zur Abdichtung der Filterpatrone im Gehäuse, wobei die Schnappverbindung aus einer Ringnut (20) im Außenumfang des Oberteils (13) und einem elastischen Absatz (22) am Unterteil (14) besteht, wobei das Mittelrohr eine Aufnahme in Form eines Ringvorsprungs (24) aufweist und der Ringvorsprung die Formdichtung (23) aufnimmt, wobei der Absatz (22) unabhängig von der Winkelstellung zwischen Ober- und Unterteil in die Ringnut einschnappen kann, wobei die Dichtung zur radialen Abdichtung an einem Austrittsstutzen angespritzte Lippen (25) aufweist und wobei die Stirnseite des Oberteils (13) derart gestaltet ist, dass gleichzeitig eine Axialnut (18) zur Vermeidung einer Materialanhäufung im Bereich der Dichtungsaufnahme am Mittelrohr vorgesehen ist.

2. Filterpatrone nach Anspruch 1, **dadurch gekennzeichnet, dass** der elastische Absatz (22) am Umfang des Unterteils (14) mindestens eine Aussparung (26) aufweist.

3. Filterpatrone nach Anspruch 2, **dadurch gekennzeichnet, dass** die Aussparungen (26) am Umfang mindestens den gleichen Winkelabschnitt einnehmen, wie die Segmente (21), die durch die Aussparungen voneinander getrennt werden und den Absatz (22) tragen.

4. Filterpatrone nach einem der vorherigen Ansprüche, **dadurch gekennzeichnet, dass** das Filtermedium (10) Folienendscheiben aufweist.

## Claims

1. Filter cartridge, in particular for filtering liquids, featuring
- a ring-shaped closed filter medium (10) which features end plates (12) at the front ends (11),
- a central tube which consists of an upper section (13) and a lower section (14), these sections being united by a snap-on connection and a sealing being provided between the end plates (12) and the central tube,
- a sealing (23) for sealing the filter cartridge in the housing, the snap-on connection consisting of an annular groove (20) on the external circumference of the upper section (13) and an elastic protrusion (22) at the lower section (14), the central tube featuring a mounting in the shape of an annular protrusion (24), and the annular protrusion accepting the sealing (23), the protrusion (22) being capable of snapping into the annular groove independently of the angle between upper and lower section, the sealing featuring injection-molded lips (25) at one outlet connection for radial sealing, and the front end of the upper section (13) being designed such that an axial groove (18) for avoiding material accumulation in the area of the sealing receptacle is provided at the central tube.

2. Filter cartridge according to claim 1, **characterized in that** the elastic protrusion (22) features at least one cut-out (26) at the circumference of the lower section (14).

3. Filter cartridge according to claim 2, **characterized in that** the cut-outs (26) at the circumference have at least the same angular section as the segments (21) which are separated from each other by the cut-outs and support the protrusion (22).

4. Filter cartridge according to one of the above claims, **characterized in that** the filter medium (10) features end plates made of transparent film.

## Revendications

1. Cartouche de filtrage, notamment pour le filtrage de liquides, présentant
- un médium de filtration (10) formant un ensemble annulaire qui présente des plaques d'extrémité (12) aux faces frontales (11),
- un tube central qui est constitué d'une section supérieure (13) et d'une section inférieure (14), ces sections étant unies par un raccord encliquetable et un étanchement étant prévu entre les plaques d'extrémité (12) et le tube central.
- un joint d'étanchéité (23) pour l'étanchement de la cartouche de filtrage dans le carter, le raccord encliquetable étant constitué d'une rainure annulaire (20) sur la périphérie externe de la section supérieure (13) et d'un épaulement (22) élastique sur la section inférieure (14), le tube central présentant un logement sous forme d'un épaulement annulaire (24) et l'épaulement annulaire recevant le joint d'étanchéité (23), l'épaulement pouvant s'encliqueter dans la rainure annulaire indépendamment de l'angle entre les sections supérieure et inférieure, le joint d'étanchéité pour l'étanchement radial présentant des lèvres (25) appliquées par injection sur un raccord de sortie, et la face frontale de la section supérieure (13) étant conçue de manière à prévoir en même temps une rainure axiale (18) pour éviter une agglomération de matériel au niveau de la réception du joint d'étanchéité sur le tube central.

2. Cartouche de filtrage selon la revendication 1, **caractérisé en ce que** l'épaulement (22) élastique sur le pourtour de la section inférieure (14) présente au moins un évidement (26).

3. Cartouche de filtrage selon la revendication 2, **caractérisé en ce que** les évidements (26) sur le pourtour présentent au moins la même section angulaire que les segments (21) qui sont séparés l'un de l'autre par les évidements et supportent l'épaulement (22).

4. Cartouche de filtrage selon une des revendications précédentes, **caractérisé en ce que** le médium de filtration (10) présente des plaques d'extrémité en film plastique.
